# EUROPEAN PATENT APPLICATION

(11) **EP 4 393 883 A1**
(43) Date of publication of application: **03.07.2024**
(21) Application number: 21967944.6
(22) Date of filing: 28.12.2021
(51) Int. Cl.: C01G 45/00, C01G 45/02

(54) **PREPARATION METHOD FOR MANGANESE HYDROXIDE AND USE THEREOF**

(30) Priority: 16.12.2021 CN 202111547410
(71) Applicant: Guizhou Dalong Huicheng New Material Co., Ltd., Dalong Economic Development Zone Tongren, Guizhou 554300 (CN)
(72) Inventor: LIU, Wuhua, Tongren, Guizhou 554300 (CN); GUAN, Xiaodong, Tongren, Guizhou 554300 (CN); LI, Dafei, Tongren, Guizhou 554300 (CN); SHEN, Hongyu, Tongren, Guizhou 554300 (CN); HUANG, Yajun, Tongren, Guizhou 554300 (CN); YI, Xin, Tongren, Guizhou 554300 (CN)
(74) Representative: Chung, Hoi Kan
(86) International application number: PCT/CN2021/141903
(87) International publication number: WO 2023/108815

(57) **Abstract**

A preparation method of manganese hydroxide including: subjecting a coarse manganese metal powder and water in a solid-to-liquid ratio under a closed and oxygen-proof environment at a reaction temperature of not less than 120°C with a reaction pressure of not less than 0.2 MPa to obtain a manganese hydroxide slurry. The manganese hydroxide slurry is subjected to full oxidation by air or oxygen at a room temperature under a normal pressure, then solid-liquid separation and drying are conducted in sequence to obtain high-purity trimanganese tetraoxide, then subjected to full reduction in an atmosphere furnace at a high temperature to obtain high-purity manganese monoxide. The manganese hydroxide slurry and carbon dioxide are subjected to a full reaction by stirring under not more than 1.0 MPa, then solid-liquid separation and drying are conducted in sequence to obtain the high-purity manganese carbonate. The high-purity manganese monoxide is obtained after the full high-temperature roasting.

## Description

### TECHNICAL FIELD

The present disclosure belongs to the technical field of manganese-based materials and a preparation method and use thereof, and specifically relates to a generation process of manganese hydroxide products and various downstream uses thereof.

### BACKGROUND

Electrolytic manganese metal is a product obtained using manganese ore as a raw material after processes such as crushing, leaching, impurity removal, and electrolysis. This product looks like a flake with a thickness of 1 mm to 2 mm and a purity of generally not less than 99.5%. The product also has impurity indicators such as iron of less than or equal to 0.01%, sulfates of less than or equal to 0.1%, and chloride ions of less than or equal to 0.01%. As of the end of 2020, an annual production of the electrolytic manganese metal in China is about 1.5 million tons, of which about 90% is used in the steel and metallurgical industry and about 10% is used in batteries, electronics, specialty chemicals and other industries. The electrolytic manganese metal products mainly include manganese-based high-purity functional materials, such as trimanganese tetraoxide as a magnetic material, manganese sulfate for batteries, trimanganese tetraoxide for batteries, high-purity manganese carbonate, and high-purity manganese monoxide.

A process route of the trimanganese tetraoxide as a magnetic material includes: crushing a metal manganese flake to not more than 100 mesh, finely grinding to -500 mesh, and then oxidizing with air in an aqueous medium in the presence of an ammonia-based catalyst, so as to obtain a product with a particle size D50 of 5 µm to 20 µm, a specific surface area of (4-8) m²/g, and a tap density of about 1 g/cm³. A process route of the trimanganese tetraoxide for batteries is basically the same as that of the trimanganese tetraoxide as a magnetic material, except that: by adjusting and controlling parameters in the ball milling and oxidation processes, a resulting product has a particle size D50 of 3 µm to 10 µm, a specific surface area of about 1 m²/g, and a tap density of not less than 2 g/cm³. To synthesize high-purity manganese carbonate from the electrolytic manganese metal, it is necessary to dissolve the electrolytic manganese metal with sulfuric acid or hydrochloric acid to obtain manganese sulfate or manganese chloride, which is then precipitated with ammonium bicarbonate to obtain the high-purity manganese carbonate. High-purity manganese monoxide derived from the electrolytic manganese metal can be produced by two routes: one is to reduce the trimanganese tetraoxide by introducing hydrogen at 700°C to 900°C; the other is to decompose the high-purity manganese carbonate at 700°C to 900°C under the protection of nitrogen.

When the electrolytic manganese metal is used to produce the above high-purity manganese functional materials, the process generally brings new pollution, such that the product has more types of impurities than the raw material electrolytic manganese metal itself, and a higher impurity content than the raw material electrolytic manganese metal itself. On one hand, ball milling is sometimes required to crush the electrolytic manganese metal to -500 mesh. Since the electrolytic manganese metal is hard and brittle with a Moh's hardness of 5.0, which is close to 5.5 to 6.0 of steel, there is a large loss of grinding balls, and grinding ball materials enter the product and become impurities. For example, due to the use of ferromanganese grinding balls, an iron content of the trimanganese tetraoxide as a magnetic material reaches not less than 3,000 ppm, which is over 30 times higher than the raw material electrolytic manganese metal of less than 100 ppm; while in order to avoid the increase of iron content in the batteries, the trimanganese tetraoxide requires zirconia grinding balls with a high cost. On the other hand, other anions and cations involved in the reaction during product preparation tend to remain in the product, thereby reducing product purity. For example, the ammonia-based catalyst (ammonium chloride or ammonium sulfate) used in the production of trimanganese tetraoxide as a magnetic material and trimanganese tetraoxide for batteries can cause the product to contain a certain amount of ammonium, sulfate radical, and chloride ions; meanwhile, sulfuric acid or hydrochloric acid used to dissolve the electrolytic manganese metal during the production of high-purity manganese carbonate can also cause the product to contain sulfate ions or chloride ions. Although adequate water washing is conducted during the process, these impurity ions in the product may still remain in the product due to encapsulation or inclusion, reaching thousands or even tens of thousands of ppm.

The impurity content levels of existing related manganese-based functional material products are shown in Table 1:

**Table 1 Impurity content levels of various manganese-based functional material products**

| Product name | Process | Mn % | Fe % | SO₄²⁻ % | Cl⁻ % |
|---|---|---|---|---|---|
| Trimanganese tetraoxide as magnetic material | Metal manganese powder oxidation (catalyzed by ammonium chloride) | 70-71 | 0.3-0.5 | -0.1 | 0.1-0.2 |
| Trimanganese tetraoxide for batteries | Metal manganese powder oxidation (catalyzed by ammonium sulfate) | 70-71 | 0.01-0.02 | 0.2-0.4 | -0.05 |
| Manganese carbonate | Manganese sulfate solution ammonium carbonate precipitation | 43-45 | -0.01 | 0.5-1.0 | -0.05 |
| Manganese monoxide | Manganese carbonate pyrolysis | 75-76 | -0.01 | 0.5-1.0 | -0.05 |
| | Hydrogen reduction of trimanganese tetraoxide as magnetic material | 76-77 | 0.3-0.5 | -0.1 | -0.1 |

Moreover, the production processes of the above manganese-based functional materials involve high environmental protection treatment costs. There are ammonia-nitrogen treatment required when using ammonia-based catalysts, recovery of by-products such as ammonium sulfate and ammonium chloride during the process, and purification for a large amount of rinsing wastewater, which may all lead to an increase in both equipment investment and production costs. Therefore, it has become urgent in research and development in this field to optimize the process route of existing manganese-based functional materials and solve the aforementioned technical problems.

### SUMMARY

A technical problem to be solved by the present disclosure is to overcome the shortcomings and defects mentioned in the background. The present disclosure provides a preparation method of manganese hydroxide and use of an electrolytic manganese metal as a raw material in producing various manganese-based high-purity functional materials, thereby maintaining a purity advantage of electrolytic manganese metal products, reducing energy consumption, achieving safe and clean production, and avoiding environmental problems as much as possible.

In order to solve the above technical problems, the technical solution proposed by the present disclosure is a preparation method of manganese hydroxide, including the following steps: subjecting a coarse manganese metal powder and water to a full reaction in a pressure reactor according to a solid-to-liquid ratio under a closed and oxygen-proof environment by stirring at a reaction temperature of not less than 120°C with a reaction pressure (gauge pressure) of not less than 0.2 MPa to obtain a manganese hydroxide slurry.

Existing manganese hydroxide (also known as manganous hydroxide, manganese (II) hydroxide) is generally produced by reacting soluble manganese salts with alkali or ammonia. Although manganese hydroxide can theoretically be used as a raw material for other manganese compounds, the manganese hydroxide is easily oxidized in the air and easily mixed with other anions and cations brought by the raw materials. As a result, there are relatively few commercially-available manganese hydroxide products that can be used directly to prepare other manganese compounds.

In the above technical solutions of the present disclosure, the coarse manganese metal powder and water are directly used as reaction raw materials. Flake manganese metal basically does not react with water at room temperature and normal pressure, while powdered manganese metal can react with hot water under normal pressure to generate manganese hydroxide and hydrogen, with a reaction shown in formula (1). Although the finer the particle size of powdered manganese metal, the faster the reaction, the reaction is difficult to complete. The generated manganese hydroxide may be wrapped on the surface of particles and can be easily oxidized into trimanganese tetraoxide with stable chemical properties, hindering the further progress of the reaction. The chemical reaction to generate trimanganese tetraoxide is shown in formula (2). Based on the above reaction raw materials, a pressure reactor with a sealed environment is specially used, and effectively isolates the air to ensure that the product manganese hydroxide is not oxidized. In addition, the preparation process of manganese hydroxide hardly carries other impurities, is extremely convenient to operate, and has low cost, high efficiency, and desirable product activity. Therefore, the produced manganese hydroxide is an excellent intermediate raw material for the preparation of other manganese compounds.

Mn + 2H₂O =^{Δ}= Mn(OH)₂ + H₂↑ .................... (1)

6Mn(OH)₂ + O₂ === 2Mn₃O₄ + 6H₂O .............. (2)

Preferably, the coarse manganese metal powder has a particle size of 100 mesh to 200 mesh. The electrolytic manganese metal is crushed and passed through a 100 mesh to 200 mesh sieve to obtain the coarse manganese metal powder. Since there is no need to grind the manganese metal highly fine (for example, the trimanganese tetraoxide as a magnetic material needs to be finely ground to -500 mesh), on one hand, high energy consumption and the possible contamination introduced by the grinding ball media can be avoided; on the other hand, the dust explosion and material oxidation can be avoided during the ball milling. Moreover, under the process conditions of the present disclosure, an excessively fine manganese metal powder may cause the reaction to occur and develop faster, generating a large amount of hydrogen instantly, and then making the reaction easily out of control to cause safety problems.

Preferably, the coarse manganese metal powder is prepared by extruding an electrolytic manganese metal through a roll crusher. Due to the brittleness of manganese metal, the extruding is preferably conducted using a roll crusher without specifically using a ball mill or other grinding equipment. Moreover, based on the requirements for particle size control in the above preferred scheme, the extrusion by the roll crusher is more likely to meet the above particle size control indicators, which can effectively reduce wear and material pollution.

Preferably, the solid-to-liquid ratio before the full reaction of the coarse manganese metal powder and the water is controlled at 1:(2-10), and the full reaction is conducted at a reaction temperature of 140°C to 200°C with a reaction pressure (gauge pressure) of 0.5 MPa and 4.0 MPa. Under the aforementioned preferred reaction conditions, the above reaction in formula (1) can be conducted more fully at a high reaction speed within 1 h.

Preferably, the reaction pressure is controlled by regulating a temperature and a pressure in the pressure reactor to the reaction temperature and the reaction pressure through self-generated heat and self-generated hydrogen obtained from the full reaction between the coarse manganese metal powder and the water; and the pressure reactor is depressurized and exhausted when the temperature or the pressure in the pressure reactor exceeds the reaction temperature or the reaction pressure. Under the control conditions of pressure and temperature of the present disclosure, once the reaction occurs, a significant increase in temperature and pressure can be observed, and the temperature and pressure in the reactor can be controlled through the self-generated heat and self-generated hydrogen of the formula (1). The higher the temperature of the material, the faster the pressure will rise. Generally, a saturated vapor pressure of water vapor at 140°C is about 0.26 MPa (gauge pressure), while the saturated vapor pressure of water vapor at 200°C is about 1.45 MPa (gauge pressure). The hydrogen generated by the reaction in the present disclosure and the sealing conditions of the pressure reactor make the gauge pressure inside the reactor reach more than 0.2 MPa, or even reach the preferred range of 0.5 MPa to 4.0 MPa. If the pressure in the reactor exceeds the preset reaction pressure of the present disclosure, the pressure reactor can be depressurized and exhausted through corresponding valves or pipelines. The exhaust gas is mainly hydrogen containing water vapor.

Preferably, the full reaction is conducted for 5 min to 60 min at the reaction temperature with the reaction pressure to obtain the manganese hydroxide slurry with a particle size D50 of 5 µm to 20 µm. In the water added to the pressure reactor, part of the water is consumed due to the reaction of formula (1), part of the water is discharged in the form of water vapor as the pressure of the pressure reactor is released, and the remaining part participates in forming white manganese hydroxide slurry. Although the particle size of the coarse manganese metal powder put into the pressure reactor may exceed 5 µm to 20 µm (for example, 75 µm to 150 µm), the coarse manganese metal powder can be continuously eroded during the reaction of the present disclosure, eventually forming manganese hydroxide particles with a preferred D50 of 5 µm to 20 µm until the manganese metal is completely consumed.

As a general technical concept, the present disclosure further provides a method for preparing high-purity trimanganese tetraoxide from a manganese hydroxide slurry prepared by the preparation method, including: subjecting the manganese hydroxide slurry prepared by the preparation method to full oxidation by air or oxygen at a room temperature to not more than 100°C under a normal pressure, and then conducting solid-liquid separation and drying in sequence to obtain the high-purity trimanganese tetraoxide.

Nowadays, the industrial production of trimanganese tetraoxide as a magnetic material or trimanganese tetraoxide for batteries mainly utilizes the two reactions of formulas (1) and (2). In order to complete the reaction, it is necessary to ball-mill the manganese metal to -500 mesh and introduce a large amount of air, control the reaction temperature to 50°C to 80°C, add an ammonia-based catalyst (such as ammonium chloride or ammonium sulfate) and other multiple conditions, and the reaction lasts from several hours to dozens of hours. In the present disclosure, the manganese hydroxide slurry prepared is directly used for full oxidation by air or oxygen at room temperature to not more than 100°C under normal pressure (the reaction is continued for a period of time after a pH value of the reaction mother liquor drops to about 7.5). Through simple solid-liquid separation and drying, high-purity trimanganese tetraoxide can be prepared with a particle size D50 of 5 µm to 20 µm, a specific surface area of greater than or equal to 4 m²/g, manganese of greater than or equal to 71%, iron of less than or equal to 0.02%, sulfate of less than or equal to 0.1%, and chloride ions of less than or equal to 0.01%. Since the manganese hydroxide slurry prepared by the present disclosure shows an extremely high activity and does not require high oxidation temperature, an extremely high reaction speed can also be achieved at room temperature. Of course, appropriate heating does not have a negative impact on the oxidation rate.

Preferably, the manganese hydroxide slurry prepared by the preparation method is subjected to sand grinding until the manganese hydroxide slurry has a D50 of less than or equal to 5 µm before the full oxidation is conducted by the air or the oxygen. The sand grinding mainly breaks up the agglomerated manganese hydroxide particles and crushes the coarse manganese hydroxide crystal grains. This process is easy to implement and has high efficiency, and does not cause high energy consumption, material contamination, and safety issues that may be caused by ball milling. The sand grinding can be conducted directly in the air. Although the materials can be oxidized and discolored during the sand grinding, a quality of the product is not affected. The manganese hydroxide slurry is subjected to sand grinding and then oxidation to obtain the high-purity ultrafine trimanganese tetraoxide with a particle size D50 of less than or equal to 5 µm, a specific surface area of greater than or equal to 10 m²/g, manganese of greater than or equal to 71%, iron of less than or equal to 0.02%, sulfate of less than or equal to 0.1%, and chloride ions of less than or equal to 0.01%. The high-purity ultrafine trimanganese tetraoxide product comprehensively exceeds other similar products currently on the market in terms of purity, particle size, specific surface area and other indicators.

More preferably, no catalyst is added during the full oxidation, and a mother liquor obtained after the solid-liquid separation is directly returned to prepare the manganese hydroxide slurry due to no additional contamination.

The high-purity trimanganese tetraoxide produced by the method of the present disclosure inherits the advantages of high purity and low impurity content of electrolytic manganese metal. Moreover, the production process does not require energy-intensive operations, ball milling steps that bring contaminants, addition of catalysts, or wastewater treatment.

As a general technical concept, the present disclosure further provides a method for preparing high-purity manganese monoxide from high-purity trimanganese tetraoxide prepared by the method, including: subjecting the high-purity trimanganese tetraoxide to full reduction in an atmosphere furnace at a high temperature to obtain the high-purity manganese monoxide.

Preferably, the reduction is conducted in the atmosphere furnace at 700°C to 900°C for 1 h to 4 h with a reducing agent selected from the group consisting of hydrogen and ammonia-dissociated gas (the ammonia-dissociated gas refers to a hydrogen-nitrogen mixture produced by high-temperature dissociation of liquid ammonia under the action of a catalyst). By adopting the optimized process parameters and using the high-purity trimanganese tetraoxide prepared by the present disclosure, the physical and chemical indicators of the prepared manganese monoxide product can be significantly improved, thereby obtaining a manganese monoxide product with manganese of greater than or equal to 77%, iron of less than or equal to 0.02%, sulfate of less than or equal to 0.1%, and chloride ions of less than or equal to 0.01%.

As a general technical concept, the present disclosure further provides a method for preparing high-purity manganese carbonate from a manganese hydroxide slurry prepared by the preparation method, including: placing the manganese hydroxide slurry prepared by the preparation method in a closed reactor with carbon dioxide to allow a full reaction by stirring at a room temperature to not more than 100°C under not more than 1.0 MPa (gauge pressure) for preferably 1 h to 5 h, and conducting solid-liquid separation and drying in sequence to obtain the high-purity manganese carbonate. The manganese hydroxide slurry should avoid contact with air before introducing the carbon dioxide, otherwise the slurry can be rapidly oxidized and turn red. There is no special requirement for the reaction temperature. The reaction can generate heat to increase the temperature of materials to promote a smooth progress of the reaction, thereby obtaining high-purity manganese carbonate with a particle size D50 of 5 µm to 20 µm, manganese of greater than or equal to 45%, iron of less than or equal to 0.02%, sulfate of less than or equal to 0.1%, and chloride ions of less than or equal to 0.01%.

Preferably, the manganese hydroxide slurry prepared by the preparation method is subjected to sand grinding under the protection of an inert gas until the manganese hydroxide slurry has a D50 of less than or equal to 5 µm before the manganese hydroxide slurry is placed in the closed reactor. The sand grinding mainly breaks up the agglomerated manganese hydroxide particles and crushes the coarse manganese hydroxide crystal grains. This process is easy to implement and has high efficiency, and does not cause high energy consumption, material contamination, and safety issues that may be caused by ball milling. Inert gas protection must be conducted during the sand grinding, and cheap nitrogen can be used as the inert gas. If there is no atmosphere protection or a poor protection effect during the sand grinding, the white slurry can be oxidized into red or purple trimanganese tetraoxide, and the already generated trimanganese tetraoxide cannot be converted into manganese carbonate during the carbonization.

Currently, most commercially available manganese carbonate is produced through the reaction of manganese salt and ammonium bicarbonate. During the reaction, the primary particles of manganese carbonate are easy to agglomerate, and the product particles produced are generally above 100 µm, and it is difficult to obtain products with a D50 of less than or equal to 50 µm, thus failing to meet the quality requirements of specific fine particles. Meanwhile, sulfate, chloride ions, ammonium ions in the reaction mother liquor can be wrapped or mixed in the product, affecting the quality of the product. In the present disclosure, the manganese hydroxide slurry is subjected to sand grinding under nitrogen protection until the D50 of the slurry is less than or equal to 5 µm, and then reacted under closed conditions to obtain high-purity ultrafine manganese carbonate with a particle size D50 of less than or equal to 5 µm, manganese of greater than or equal to 45%, iron of less than or equal to 0.02%, sulfate of less than or equal to 0.1%, and chloride ions of less than or equal to 0.01%.

A chemical reaction formula for generating manganese carbonate in preparing the manganese carbonate is shown in formula (3). Although the reaction is a gas-solid phase reaction, the reaction proceeds smoothly and completely. On one hand, this is due to the small particles of manganese hydroxide and its high reactivity; on the other hand, the use of a closed reactor can increase the solubility of carbon dioxide in the slurry and promote a smooth progress of the reaction. However, during the reaction, the higher the pressure of controlled carbon dioxide, the more conducive it is to the dissolution of carbon dioxide gas in the slurry. A shorter time required for the reaction means a more complete reaction. However, excessive pressure can have an impact on the effective utilization of carbon dioxide raw materials.

Mn(OH)₂ + CO₂ === MnCO₃ + H₂O ............ (3).

As a general technical concept, the present disclosure further provides a method for preparing high-purity manganese monoxide from high-purity manganese carbonate prepared by the method, including: subjecting the high-purity manganese carbonate to full high-temperature roasting in an atmosphere furnace under the protection of an inert gas to obtain the high-purity manganese monoxide.

Preferably, the high-temperature roasting in the atmosphere furnace is conducted at 700°C to 900°C for 1 h to 4 h under the protection of the inert gas of nitrogen.

The above method is a process for preparing manganese monoxide by pyrolyzing manganese carbonate. However, due to the different quality characteristics of raw materials, a quality of the manganese monoxide product prepared by pyrolysis of high-purity manganese carbonate prepared by the present disclosure is significantly improved, thereby obtaining high-purity manganese monoxide with manganese of greater than or equal to 77%, iron of less than or equal to 0.02%, sulfate of less than or equal to 0.1%, and chloride ions of less than or equal to 0.01%.

In the present disclosure, the percentages related to product component content and element content generally refer to mass percentages unless otherwise specified.

Compared with the prior art, the present disclosure has the following beneficial effects:
1) In the present disclosure, the manganese metal powder is used to prepare highly-active and high-purity manganese hydroxide, and then the manganese hydroxide is used to produce special manganese-based high-purity functional materials such as high-purity/ultrafine trimanganese tetraoxide, high-purity/ultrafine manganese carbonate, and high-purity manganese monoxide. There is no need to ball mill the hard manganese metal during the entire preparation, and only the manganese hydroxide slurry with low hardness is subjected to sand grinding. This process can effectively reduce the wear of the grinding balls, reduce the degree of contamination of the products by the grinding balls, improve safety, and reduce energy consumption.
2) In the present disclosure, the raw materials used in the production and preparation of special manganese-based high-purity functional materials such as trimanganese tetraoxide, manganese carbonate, and manganese monoxide are mainly metal manganese, water, carbon dioxide, and air (or oxygen). The entire process does not require catalysts and does not produce by-products such as ammonium sulfate and ammonium chloride. On one hand, this avoids material contamination; on the other hand, there is no need for water washing and supporting environmental protection treatments. The product has high purity and fine particle size.

### BRIEF DESCRIPTION OF DRAWINGS

To describe the technical solutions in examples of the present disclosure or in the prior art more clearly, the accompanying drawings required for describing the examples or the prior art will be briefly described below. Apparently, the accompanying drawings in the following description show some examples of the present disclosure, and a person of ordinary skill in the art may still derive other drawings from these accompanying drawings without creative efforts.
FIG. 1 shows a particle size distribution diagram of the manganese hydroxide slurry prepared in Example 1 of the present disclosure;
FIG. 2 shows a particle size distribution diagram of the manganese hydroxide slurry prepared in Example 2 of the present disclosure;
FIG. 3 shows a particle size distribution diagram of the high-purity ultrafine trimanganese tetraoxide prepared in Example 4 of the present disclosure;
FIG. 4 shows a particle size distribution diagram of the high-purity ultrafine manganese carbonate prepared in Example 7 of the present disclosure; and
FIG. 5 shows a particle size distribution diagram of the high-purity manganese monoxide prepared in Example 8 of the present disclosure.

### DETAILED DESCRIPTION OF THE EMBODIMENTS

In order to facilitate the understanding of the present disclosure, the present disclosure is described in detail below in conjunction with the accompanying drawings of the specification and the preferred examples, but the protection scope of the present disclosure is not limited to the following specific examples.

Unless otherwise defined, all technical terms used hereinafter have the same meaning as commonly understood by those skilled in the art. The technical terms used herein are merely for the purpose of describing specific examples, and are not intended to limit the protection scope of the present disclosure.

Unless otherwise specified, various raw materials, reagents, instruments, equipment, and the like used in the present disclosure can be purchased from the market or can be prepared by existing methods.

### Example 1:

A preparation method of manganese hydroxide included the following steps:

An electrolytic manganese metal flake was extruded and crushed using a roll crusher, and passed through a 150 mesh sieve to obtain a -150 mesh coarse manganese metal powder.

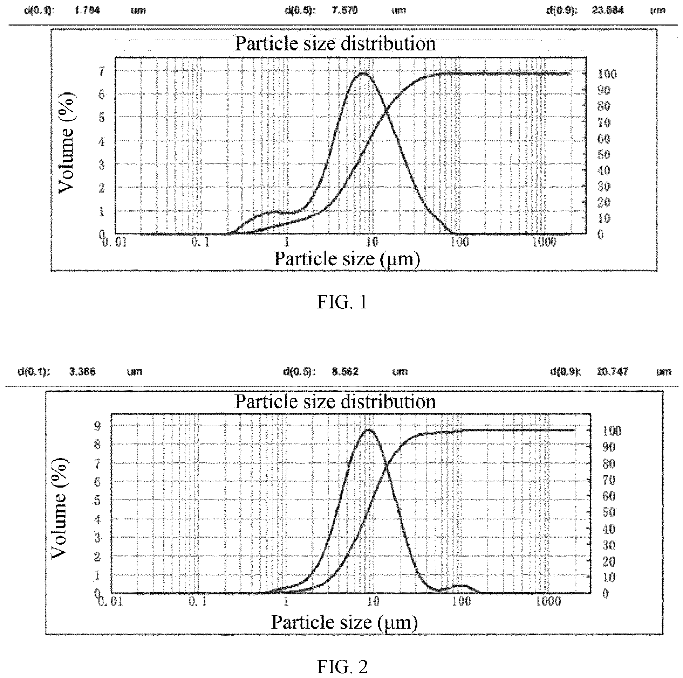

200 g of the coarse manganese metal powder was mixed with water at a solid-to-liquid ratio of 1:8 in a 316L stainless steel pressure reactor with a volume of 1 L, and heated in a closed and oxygen-proof environment to 150°C by stirring, such that self-generated heat and self-generated hydrogen of the reaction between the coarse manganese metal powder and water could regulate the temperature and pressure in the reactor to set reaction temperature and reaction pressure. The temperature and pressure in the reactor continued to rise. When the pressure in the reactor reached 3.0 MPa (gauge pressure), an exhaust valve of the pressure reactor was opened to discharge the gas (hydrogen and/or water vapor), the pressure at 3.0 MPa was maintained for 15 min, and then cooled to obtain a manganese hydroxide slurry. It was detected that manganese hydroxide particles in the slurry had a particle size D50 of approximately 7.6 µm, and a particle size distribution diagram was shown in FIG. 1.

### Example 2:

A preparation method of manganese hydroxide included the following steps:

An electrolytic manganese metal flake was extruded and crushed using a roll crusher, and passed through a 100 mesh sieve to obtain a -100 mesh coarse manganese metal powder.

2,000 g of the coarse manganese metal powder was mixed with water at a solid-to-liquid ratio of 1:4 in a 316L stainless steel pressure reactor with a volume of 10 L, and heated in a closed and oxygen-proof environment to 180°C by stirring, such that self-generated heat and self-generated hydrogen of the reaction between the coarse manganese metal powder and water could regulate the temperature and pressure in the reactor to set reaction temperature and reaction pressure. The temperature and pressure in the reactor continued to rise. When the pressure in the reactor reached 3.5 MPa (gauge pressure), an exhaust valve of the pressure reactor was opened to discharge the gas (hydrogen and/or water vapor), the pressure at 3.5 MPa was maintained for 30 min, and then cooled to obtain a manganese hydroxide slurry. It was detected that manganese hydroxide particles in the slurry had a particle size D50 of approximately 8.6 µm, and a particle size distribution diagram was shown in FIG. 2.

### Example 3:

A preparation method of high-purity trimanganese tetraoxide included the following steps:

The manganese hydroxide slurry prepared in Example 1 was subjected to oxidation by introducing sufficient air under room temperature and normal pressure under stirring until a mother liquor had a pH value of less than 7.5, the oxidation was then continued for half an hour, suction filtration was conducted, and a resulting filter cake was dried at 120°C for 24 h to obtain the high-purity trimanganese tetraoxide. The wastewater after suction filtration could be directly returned to prepare the manganese hydroxide slurry. After testing, the high-purity trimanganese tetraoxide had a particle size D50 of 8.1 µm, a specific surface area of 8.4 m²/g, a manganese content of 71.5%, an iron content of 0.0028%, a sulfate content of 0.062%, and a chloride ion content of 0.0064%.

### Example 4:

A preparation method of high-purity ultrafine trimanganese tetraoxide included the following steps:

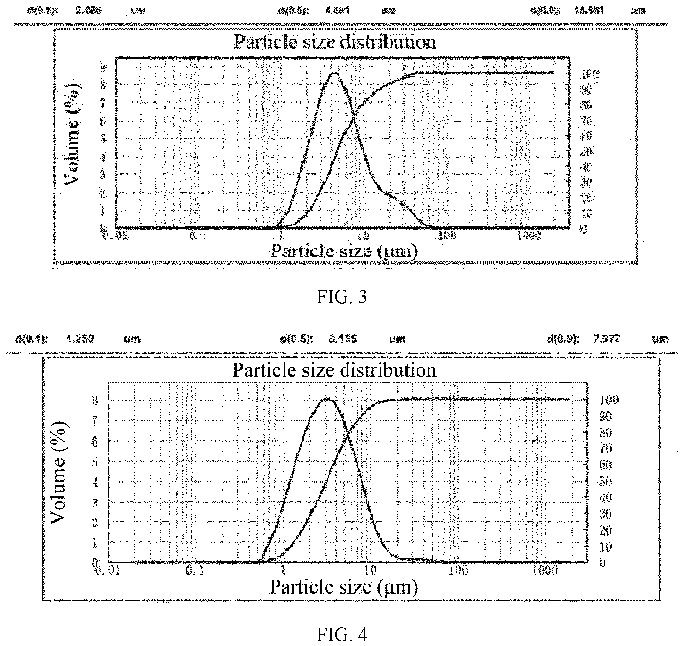

2 L of the manganese hydroxide slurry prepared in Example 2 was diluted with 2 times a volume of water, and then subjected to sand grinding using a sand grinding machine to obtain a slurry with a particle size D50 of approximately 4.5 µm. The slurry was subjected to oxidation by introducing sufficient air under room temperature and normal pressure under stirring until a mother liquor had a pH value of less than 7.5, the oxidation was then continued for half an hour, suction filtration was conducted, and a resulting filter cake was dried at 120°C for 24 h to obtain the high-purity ultrafine trimanganese tetraoxide. The wastewater after suction filtration could be directly returned to prepare the manganese hydroxide slurry. After testing, the high-purity trimanganese tetraoxide had a particle size D50 of approximately 4.9 µm (particle size distribution shown in FIG. 3), a specific surface area of 12.1 m²/g, a manganese content of 71.1%, an iron content of 0.0048%, a sulfate content of 0.087%, and a chloride ion content of 0.0047%.

### Example 5:

A preparation method of high-purity manganese monoxide included the following steps:

50 g of the high-purity ultrafine trimanganese tetraoxide prepared in Example 4 was placed in an atmosphere furnace to allow reduction by introducing hydrogen at 800°C for 2 h. When the temperature was lowered to 500°C, hydrogen flow was stopped and nitrogen was introduced for protection, cooled to 80°C and discharged to obtain the high-purity manganese monoxide. After testing, the manganese monoxide product had a particle size D50 of 5.5 µm, a specific surface area of 1.3 m²/g, a manganese content of 77.5%, an iron content of 0.0057%, a sulfate content of 0.042%, and a chloride ion content of 0.0048%.

### Example 6:

A preparation method of high-purity manganese carbonate included the following steps:

After the manganese hydroxide slurry was prepared in Example 1, subsequent operations were continued in the closed pressure reactor. When the temperature of the pressure reactor dropped to 50°C, carbon dioxide was introduced, and a reaction was continued by stirring for 3 h at room temperature and 0.5 MPa gauge pressure, suction filtration was conducted, and a resulting filter cake was dried at 80°C for 24 h to obtain the high-purity manganese carbonate. After testing, the high-purity manganese carbonate had a particle size D50 of 8.7 µm, a specific surface area of 1.7 m²/g, a manganese content 47.0%, an iron content of 0.0032%, a sulfate content of 0.071%, and a chloride ion content of 0.0053%.

### Example 7:

A preparation method of high-purity ultrafine manganese carbonate included the following steps:

The manganese hydroxide slurry prepared in Example 2 was removed from the pressure reactor under nitrogen protection and diluted with 3 times a volume of water, and then subjected to sand grinding under nitrogen protection to obtain a slurry with a particle size D50 of approximately 3 µm.

7 L of the slurry after sand grinding was placed in a 10 L pressure reactor, carbon dioxide was introduced at room temperature, a reaction was conducted by stirring for 4 h at room temperature and 0.1 MPa gauge pressure, a mother liquor was separated by suction filtration, and a resulting filter cake was dried at 80°C for 24 h to obtain the high-purity ultrafine manganese carbonate. After testing, the high-purity ultrafine manganese carbonate had a particle size D50 of 3.2 µm (particle size distribution shown in FIG. 4), a specific surface area of 4.4 m²/g, a manganese content of 46.5%, an iron content of 0.0027%, a sulfate content of 0.067%, and a chloride ion content of 0.0039%.

### Example 8:

A preparation method of high-purity manganese monoxide included the following steps:

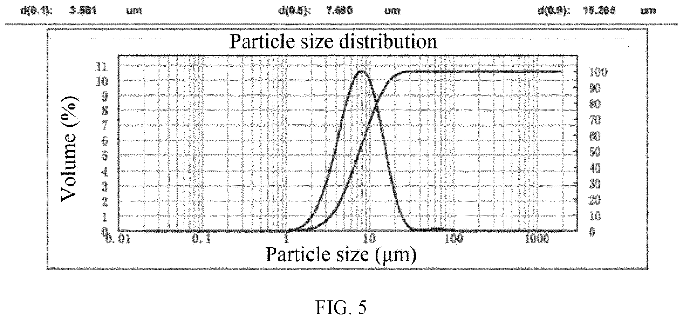

100 g of the high-purity manganese carbonate prepared in Example 6 was placed in an atmosphere furnace to allow roasting at 800°C for 3 h under nitrogen protection, cooled to 80°C and discharged to obtain the high-purity manganese monoxide. After testing, the manganese monoxide product had a particle size D50 of 7.7 µm (particle size distribution shown in FIG. 5), a specific surface area of 1.2 m²/g, a manganese content of 77.6%, an iron content of 0.0041%, a sulfate content of 0.036%, and a chloride ion content of 0.0049%.

In the above examples, the determination methods of each component or element were as follows:
particle size distribution - particle size analyzer;
specific surface area - BET method;
manganese content - (manganese carbonate: ammonium nitrate redox method HG/T 4203-2011, and manganese monoxide and trimanganese tetraoxide: ferrous ammonium sulfate titration method GB/T21836-2008 Appendix A);
iron content - ICP method, sulfate - turbidimetric method (GB/T23844-2009), chloride ion - turbidimetric method (GB/T23945-2009).

## Claims

1. A preparation method of manganese hydroxide, comprising the following steps: subjecting a coarse manganese metal powder and water to a full reaction in a pressure reactor according to a solid-to-liquid ratio under a closed and oxygen-proof environment by stirring at a reaction temperature of not less than 120°C with a reaction pressure of not less than 0.2 MPa to obtain a manganese hydroxide slurry.

2. The preparation method according to claim 1, wherein the coarse manganese metal powder has a particle size of 100 mesh to 200 mesh.

3. The preparation method according to claim 1, wherein the coarse manganese metal powder is prepared by extruding an electrolytic manganese metal through a roll crusher.

4. The preparation method according to claim 1, wherein the solid-to-liquid ratio before the full reaction of the coarse manganese metal powder and the water is controlled at 1 :(2-10), and the full reaction is conducted at a reaction temperature of 140°C to 200°C with a reaction pressure of 0.5 MPa and 4.0 MPa.

5. The preparation method according to claim 1, wherein the reaction pressure is controlled by regulating a temperature and a pressure in the pressure reactor to the reaction temperature and the reaction pressure through self-generated heat and self-generated hydrogen obtained from the full reaction between the coarse manganese metal powder and the water; and the pressure reactor is depressurized and exhausted when the temperature or the pressure in the pressure reactor exceeds the reaction temperature or the reaction pressure.

6. The preparation method according to claim 1, wherein the full reaction is conducted for 5 min to 60 min at the reaction temperature with the reaction pressure to obtain the manganese hydroxide slurry with a particle size D50 of 5 µm to 20 µm.

7. A method for preparing high-purity trimanganese tetraoxide from a manganese hydroxide slurry prepared by the preparation method according to any one of claims 1 to 6, comprising: subjecting the manganese hydroxide slurry prepared by the preparation method to full oxidation by air or oxygen at a room temperature to not more than 100°C under a normal pressure, and then conducting solid-liquid separation and drying in sequence to obtain the high-purity trimanganese tetraoxide.

8. The method according to claim 7, wherein the manganese hydroxide slurry prepared by the preparation method is subjected to sand grinding until the manganese hydroxide slurry has a D50 of less than or equal to 5 µm before the full oxidation is conducted by the air or the oxygen.

9. The method according to claim 7 or 8, wherein no catalyst is added during the full oxidation, and a mother liquor obtained after the solid-liquid separation is directly returned to prepare the manganese hydroxide slurry.

10. A method for preparing high-purity manganese monoxide from high-purity trimanganese tetraoxide prepared by the method according to any one of claims 7 to 9, comprising: subjecting the high-purity trimanganese tetraoxide to full reduction in an atmosphere furnace at a high temperature to obtain the high-purity manganese monoxide.

11. The method according to claim 10, wherein the reduction is conducted in the atmosphere furnace at 700°C to 900°C for 1 h to 4 h with a reducing agent selected from the group consisting of hydrogen and ammonia-dissociated gas.

12. A method for preparing high-purity manganese carbonate from a manganese hydroxide slurry prepared by the preparation method according to any one of claims 1 to 6, comprising: placing the manganese hydroxide slurry prepared by the preparation method in a closed reactor with carbon dioxide to allow a full reaction by stirring at a room temperature to not more than 100°C under not more than 1.0 MPa, and conducting solid-liquid separation and drying in sequence to obtain the high-purity manganese carbonate.

13. The method according to claim 12, wherein the manganese hydroxide slurry prepared by the preparation method is subjected to sand grinding under the protection of an inert gas until the manganese hydroxide slurry has a D50 of less than or equal to 5 µm before the manganese hydroxide slurry is placed in the closed reactor.

14. A method for preparing high-purity manganese monoxide from high-purity manganese carbonate prepared by the method according to claim 12 or 13, comprising: subjecting the high-purity manganese carbonate to full high-temperature roasting in an atmosphere furnace under the protection of an inert gas to obtain the high-purity manganese monoxide.

15. The method according to claim 14, wherein the high-temperature roasting in the atmosphere furnace is conducted at 700°C to 900°C for 1 h to 4 h under the protection of the inert gas of nitrogen.
